# FASCICULE DE BREVET EUROPEEN

(11) **EP 0 825 464 B1**
(45) Date de publication et mention de la délivrance du brevet: **21.01.2004**
(21) Numéro de dépôt: 97401942.4
(22) Date de dépôt: 18.08.1997
(51) Int. Cl.: G02B 6/42, G02B 6/32, G02B 6/255

(54) **Procédé de fabrication et d'assemblage d'un dispositif de couplage optique collectif sur l'extrémité d'un faisceau de plusieurs fibres optiques monomodes**
Verfahren zur Herstellung und Montage von einem kollektiven optischen Kopplungselement am Ende eines Bündels von mehreren Monomodenfasern
Process of manufacturing and assembling a collective optical coupling device onto the end of a bundle of several monomode optical fibers

(30) Priorité: 21.08.1996 FR 9610327
(43) Date de publication de la demande: 25.02.1998
(73) Titulaire: FRANCE TELECOM, 75015 Paris (FR)
(72) Inventeur: Thual, Monique, 94230 Cachan (FR); Lostec, Jean, 94230 Cachan (FR); Auvray, Patrick, 94230 Cachan (FR); Clavel, Bénédicte, 94230 Cachan (FR)
(74) Mandataire: Bentz, Jean-Paul

(56) Documents cités:
- EP-A- 0 175 486
- EP-A- 0 233 639
- EP-A- 0 531 225
- EP-A- 0 575 993
- EP-A- 0 603 042
- WO-A-86/04156
- WO-A-95/18395
- US-A- 4 456 330
- US-A- 5 095 519
- SHIRAISHI K ET AL: "A FIBER LENS WITH A LONG WORKING DISTANCE FOR INTEGRATED COUPLING BETWEEN LASER DIODES AND SINGLE-MODE FIBERS" JOURNAL OF LIGHTWAVE TECHNOLOGY, vol. 13, no. 8, 1 août 1995, pages 1736-1744, XP000537132
- PATENT ABSTRACTS OF JAPAN vol. 008, no. 051 (P-259), 8 mars 1984 & JP 58 202413 A (HITACHI SEISAKUSHO KK), 25 novembre 1983,
- PATENT ABSTRACTS OF JAPAN vol. 015, no. 449 (P-1275) 14 Novembre 1994 & JP 03 189 607 A (NIPPON TELEGR & TELEPH CORP) 19 Août 1991
- Journal of Optical Communications, Vol.10, No.2, Juin 1989, pages 61-66

## Description

La présente invention concerne un procédé de fabrication et d'assemblage d'un dispositif de couplage optique collectif sur l'extrémité d'un faisceau de plusieurs fibres monomodes, en vue de permettre le couplage optique desdites fibres monomodes avec un module optoélectronique.

Le domaine de l'invention est celui des télécommunications optiques et plus particulièrement celui des réseaux de distribution qui concernent des liaisons de courte distance et nécessitent des efforts importants en terme de coût tant au niveau des infrastructures que des composants d'extrémité. Dans le domaine des télécommunications, la longueur d'onde est le plus souvent 1,3 ou 1,55 µm.

L'assemblage de modules optoélectroniques appelé couplage optique constitue une étape dont il est nécessaire d'abaisser le coût. Une solution consiste à traiter cette étape de manière collective. La difficulté est double : d'une part elle est liée à la désadaptation de la forme et de la taille des modes optiques des éléments à coupler, d'autre part aux précisions de positionnement qui sont submicroniques.

En effet, la puissance couplée chute de 1 dB lorsque l'on s'éloigne d'une distance inférieure au micromètre de la position optimale dans le plan perpendiculaire à l'axe optique, et de quelques micromètres (µm) sur l'axe optique. On sait positionner les éléments à coupler en dynamique, c'est-à-dire en ajustant en temps réel le positionnement en fonction du taux de couplage. Mais l'assemblage passif entre barrettes de composants et peignes de fibres, qui consiste à positionner les différents éléments sans alimenter les composants, est difficile à réaliser.

Pour résoudre le problème du couplage laser-fibre, l'utilisation d'une micro lentille a été proposé. K. SHIRAISHI et al. proposent en particulier une lentille constituée d'un tronçon de fibre sans coeur d'extrémité hémisphérique, obtenue par micro-usinage, soudé à une fibre monomode dont le coeur a été localement élargi par chauffage. Les taux de couplage obtenus l'ont été avec des tolérances de positionnement sévères. Ces solutions sont complexes à mettre en oeuvre et difficilement compatibles avec un traitement collectif sur rubans de fibres par exemple.

Le document WO-A-86 04156 décrit un dispositif de couplage optique entre une fibre monomode et un module optoélectronique. Le dispositif de couplage comprend une lentille formée d'un tronçon cylindrique de fibre à gradient d'indice présentant un diamètre extérieur de 125 µm accordé à la fibre monomode.

Le document Patent Abstracts of Japan résumant la demande de brevet japonaise de numéro de publication JP-58202413 décrit un dispositif de couplage optique entre une fibre monomode et un laser. Le dispositif de couplage présente comprend une lentille et un tronçon de fibre de silice disposé entre la fibre monomode et la lentille. Le tronçon de fibre de silice ainsi disposé améliore le couplage entre le laser et la fibre optique monomode.

Le document Patent Abstracts of Japan résumant la demande de brevet japonaise de numéro de publication JP-03189607 décrit un dispositif de couplage optique pour fibre optique monomode. Un tronçon de fibre optique multimodes d'une longueur approximative de 1 mm est couplé à un tronçon de fibre optique monomode. L'extrémité du tronçon de fibre optique multimodes est attaquée chimiquement sélectivement pour réaliser une lentille sphérique. La forme de la lentille est déterminée en fonction de l'indice de réfraction du coeur de la fibre.

Le document US-A-4 456 330 décrit un dispositif de couplage optique d'une fibre optique monomode à un laser. Le dispositif de couplage comprend une barre en fibre de silice. Ce dispositif est soudé à une extrémité de la fibre optique et coupé à une longueur définie. L'extrémité libre est arrondie par un traitement thermique. La longueur du dispositif de couplage est supérieure au diamètre de la fibre monomode.

Le document Journal of Optical Communications, Vol 10, N°2, Juin 1989, pages 61-66, décrit un procédé d'assemblage de deux faisceaux présentant chacun plusieurs fibres optiques monomodes. Ce document permet de réduire les pertes au niveau de l'épissure entre des fibres monomodes. Le procédé comprend la traction de l'épissure sur une certaine course après l'assemblage des deux faisceaux. Le document définit des calculs des courses de traction optimales.

Le document EP-A-0 531 225 décrit un procédé de clivage d'une fibre optique destiné à obtenir une face oblique à l'extrémité d'une fibre optique. Deux points de la fibre optique sont déplacés transversalement l'un par rapport à l'autre et une amorce de rupture est réalisée dans la fibre entre les points déplacés. Ce procédé est notamment appliqué à une fibre optique d'un diamètre de 125µm. Le procédé décrit est également applicable au clivage d'une pluralité de fibres optiques.

La présente invention a pour premier objet de proposer un procédé de fabrication d'un dispositif de couplage permettant de relâcher les tolérances de positionnement des fibres sur l'axe optique et dans le plan perpendiculaire de cet axe.

Toutes les étapes de réalisation du procédé selon l'invention sont entièrement collectives. En effet, selon l'invention, on manipule uniquement des rubans de fibres tout au long du procédé, et toutes les fibres d'un même ruban subissent les mêmes opérations au même moment. L'avantage est multiple, non seulement en terme économique, en particulier par le gain de temps de fabrication et d'assemblage que procure un traitement collectif par rapport à un traitement individuel, mais aussi en terme d'homogénéité des micro-optiques obtenues en bout de ruban.

La simplicité du procédé proposé procure à nos optiques leur caractère économique et reproductible. En effet, celui-ci ne comprend que des opérations simples telles que le dénudage, le clivage, et la soudure qui rend le procédé reproductible.

Une solution à ce poblème consiste à mettre en oeuvre un procédé de fabrication et d'assemblage d'un dispositif de couplage optique sur l'extrémité d'un faisceau de plusieurs fibres monomodes, tel que défini à la revendication 1.

Selon un autre mode de réalisation, les tronçons de silice sont remplacés par tout type de fibre d'indice adapté, une fibre à saut d'indice par exemple.

Selon un mode préférentiel de mise en oeuvre du procédé objet de l'invention, les faisceaux de fibre ont une structure sous forme d'au moins un ruban ;
- Dans une application de mise en oeuvre du procédé le module optoélectronique est constitué de composants actifs dont le nombre correspond au nombre de fibres à coupler.
- Ces composants actifs sont soit des lasers soit des photodiodes.

A titre illustratif, on décrira également un dispositif de couplage optique entre au moins une fibre monomode et un module optoélectronique, comportant au moins une lentille, dans lequel chaque lentille est formée par un tronçon cylindrique de fibre à gradient d'indice de 125 µm de diamètre extérieur, non couvert par la présente invention.

Ce dispositif peut en outre comporter, entre la fibre monomode et la lentille, un tronçon de fibre de silice destiné à placer la fibre monomode à la bonne distance de la lentille et/ou à adapter l'indice du milieu de propagation de la fibre monomode à celui de la lentille ;
- Dans le cas où le dispositif réalise un couplage entre plusieurs fibres monomodes et un module optoélectronique, les fibres monomodes sont dans une structure sous forme de ruban ;
- Selon certaines applications, le module électronique est composé d'un ensemble de composants actifs ;
   - les composants actifs sont des lasers ;
   - les composants actifs sont des photodiodes ;

- Pour d'autres applications, le module électronique est composé soit d'une fibre monomode soit d'un faisceau de fibres, le dispositif servant alors à coupler des fibres optiques entre-elles ;
- Selon un mode préféré de réalisation, les fibres sont structurées sous forme d'au moins un ruban.

Les avantages procurés par l'invention seront mieux compris au travers de la description suivante qui se réfère aux dessins annexés qui illustrent l'invention sans caractère limitatif et sur lesquels :
Les figures 1A à 1E illustrent schématiquement les étapes d'un procédé de fabrication d'un dispositif de couplage, dont la séquence d'étape n'est pas couverte par l'invention.
Les figures 2A à 2J illustrent schématiquement les différentes étapes du procédé selon l'invention,
La figure 3 illustre la propagation du faisceau avec (en trait continu) et sans tronçon de silice (en pointillé) interposé entre la fibre monomode et le tronçon de fibre à gradient d'indice.
La figure 4 illustre schématiquement un dispositif de couplage optique collectif entre un ruban de fibres et un micromodule constitué par une barrette de lasers,
La figure 5 illustre schématiquement un dispositif de couplage optique collectif entre un ruban de fibres et un micromodule constitué par un autre ruban de fibres monomodes équipé d'un même dispositif de couplage, ces dispositifs de couplage n'étant fournis qu'à titre illustratif et n'étant pas couverts par l'invention.
La figure 6 illustre un banc de fracture.

La description qui est faite ci-après est faite à partir de faisceaux de fibres se présentant sous la forme de rubans à l'intérieur desquels les fibres sont alignées et espacées régulièrement. La technologie de fabrication de tels rubans est bien connue aujourd'hui et ne sera pas plus détaillée. On parlera donc dans toute la suite de rubans de fibres plutôt que de faisceaux.

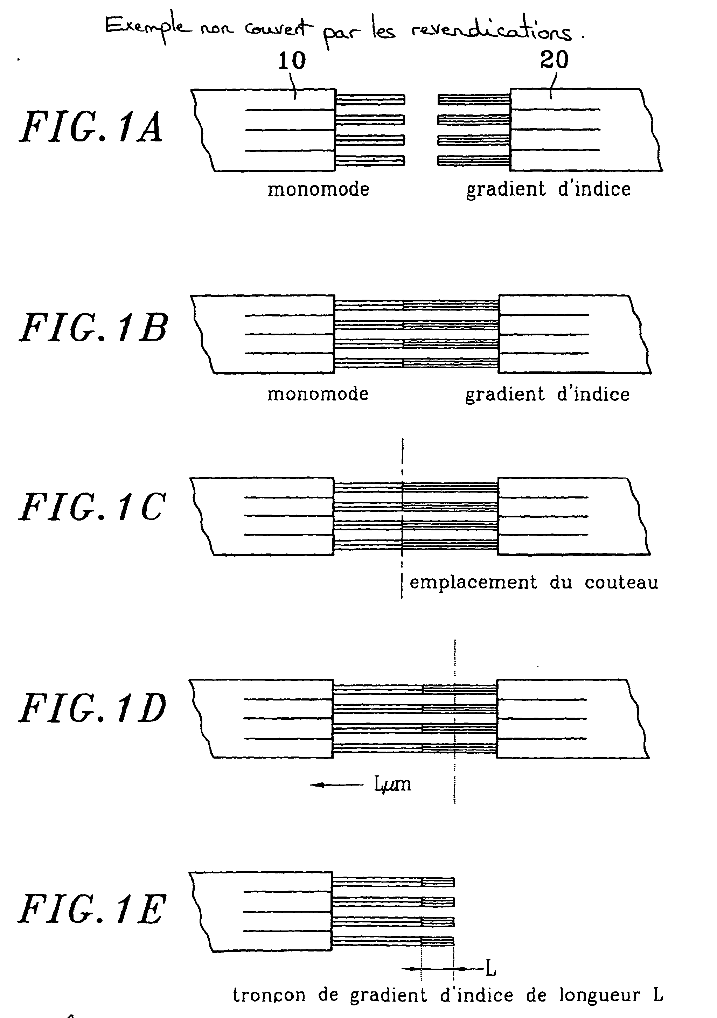

Un procédé (Fig. 1A-1E) comporte les étapes d'assemblage, à un ruban de fibres monomodes 10, d'un ruban de fibres multimodes à gradient d'indice 20 et de fracture des fibres à gradient d' indice.

La séquence d'étapes de ce procédé n'est pas couverte par les revendications.

Les détails de réalisation de ces étapes sont illustrés respectivement par les figures 1A à 1C et 1D, 1E :
- Mise en place et alignement des deux rubans de fibres 10 et 20 dans la soudeuse, (1A)
- Soudure des fibres des deux rubans 10, 20, (1B)
- Alignement du plan de soudure avec la trace du plan de fracture, 1C
- Déplacement de l'ensemble d'une distance L et amorce de fracture, 1D
- Fracture du ruban de fibres multimodes à gradient d'indice, 1E.

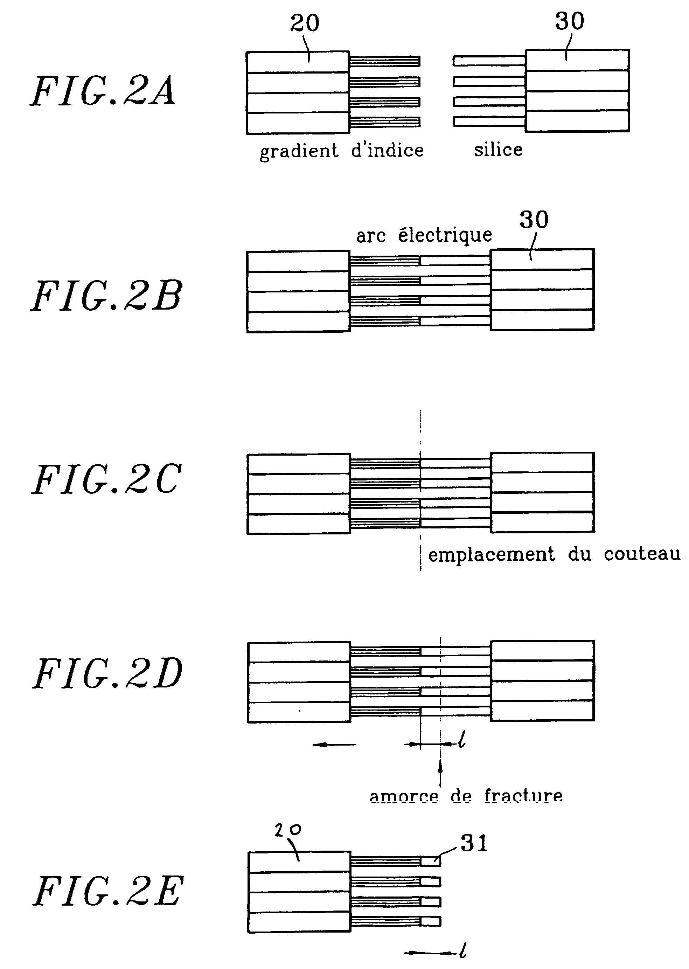

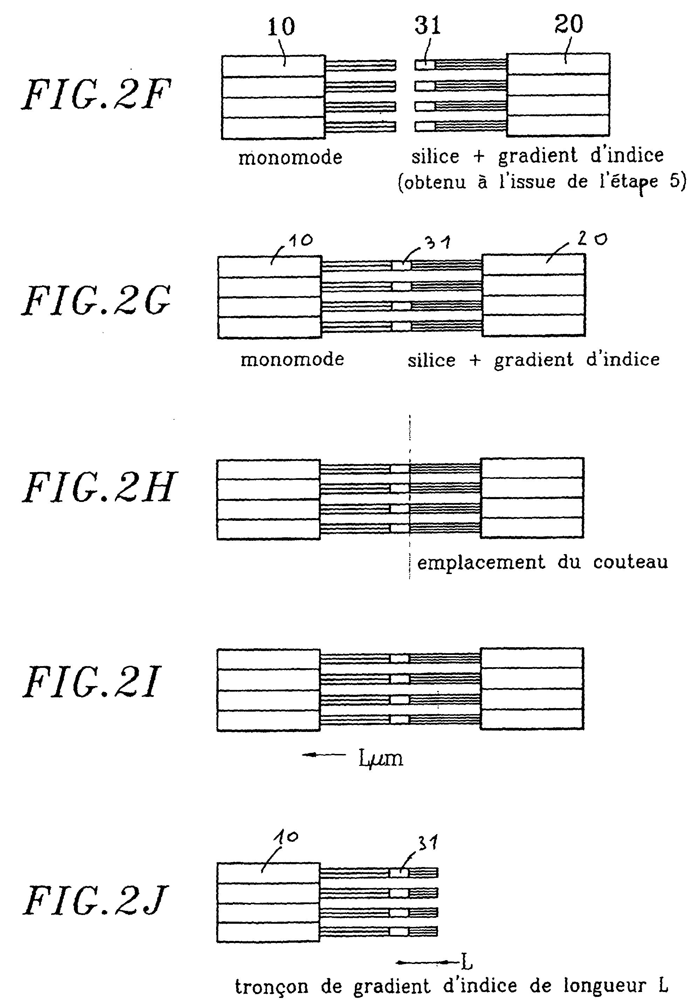

Un mode de réalisation du procédé selon l'invention comporte (Fig. 2A-2J) les étapes d'assemblage d'un ruban de fibres multimodes à gradient d'indice 20 à un ruban de fibres silice 30, fracture des fibres de silice 30, assemblage de cet ensemble à un ruban de fibres monomodes 10 et enfin fracture des fibres du ruban de fibres multimodes à gradient d'indice 20 prolongées par des sections de fibre en silice.

Les détails de réalisation de ces étapes sont illustrés respectivement par les figures 2A à 2C ; 2D, 2E ; 2F à 2I et 2J :
- dénudage et clivage des rubans de silice 30 et de fibres multimodes à gradient d'indice 20 et mise en place dans une soudeuse à structure périodique en V selon un pas correspondant au pas du ruban utilisé, 250 µm par exemple, chaque V correspondant au diamètre extérieur d'une fibre soit 125 µm par exemple. (figure 2A)
- soudage du ruban de fibres de silice 30 au ruban de fibres à gradient d'indice 20 (2B),
- Alignement du plan de soudure avec la trace du plan de fracture (2C),
- Translation de l'ensemble sur une distance 1 puis amorce de la fracture (2D).
- Fracture des fibres du ruban de fibres de silice à l'aide d'un banc de fracture de manière à réaliser n tronçons de silice de longueur l, n étant le nombre de fibres comprises dans le ruban.
On obtient à ce stade n tronçons de fibres de silice de longueur l soudés à n fibres multimodes à gradient d'indice. (2E)
- Reproduction de ces étapes sur l'ensemble ainsi réalisé et un ruban de fibres monomodes 10. On obtient ainsi un dispositif de couplage optique collectif constitué de tronçons cylindriques de fibres à continuité de forme de bout en bout :
- Mise en place et alignement des rubans 10 et 20 dans la soudeuse, (2G)
- Soudure des fibres monomodes aux tronçons de silice 31, (2G)
- Alignement du plan de soudure avec le plan de fracture, (2H)
- Déplacement de l'ensemble d'une distance L et amorce de fracture, (2I)
- Fracture du ruban de fibres multimodes à gradient d'indice. (2J)

Principe de fonctionnement des dispositifs de couplage obtenu par ce procédé :

Dans une fibre multimode à gradient d'indice, les faisceaux se propagent de manière périodique suivant l'axe optique. Ceci est dû aux réfractions latérales successives subies par l'onde électromagnétique lorsqu'elle se propage dans un milieu d'indice qui décroît du centre de la fibre vers la périphérie. La période P (souvent appelée pitch) dépend du profil d'indice de la fibre, qui suit une loi parabolique, et de la longueur d'onde de la lumière qui s'y propage.

Lorsqu'on coupe un tronçon de fibre multimode à gradient d'indice, on obtient une lentille dont les propriétés dépendent de sa longueur L, que l'on définit en fraction de P, (soit L = P/4, P/2, 3P/2, plus généralement xP, x étant un réel quelconque), du profil du gradient d'indice de la fibre et de la longueur d'onde de travail.

L'adaptation de mode entre l'objet et l'image se fait grâce au tronçon de fibre à gradient d'indice de la même manière qu'avec une lentille à gradient d'indice plan-plan classique (10).

Le rôle de la silice est d'étendre spacialement le faisceau lumineux en sortie de fibre monomode. Cette extension permet d'utiliser tout le volume du gradient d'indice. Le tronçon de gradient d'indice est alors exploité au mieux en tant que lentille puisque le volume d'occupation du faisceau lumineux est égale au volume du gradient d'indice.

Les tronçons de silice pourraient être remplacés par des tronçons de fibres d'indice adapté, des fibres à saut d'indices par exemple

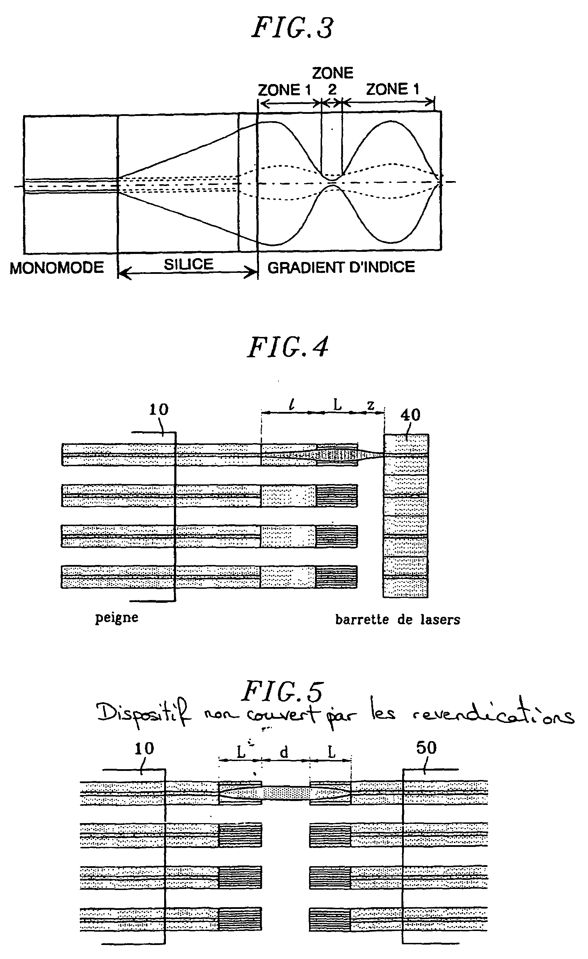

La figure 3 illustre de manière qualitative la différence de propagation du faisceau avec et sans tronçon de silice entre la fibre monomode et la lentille à gradient d'indice. (NB: les cotes réelles ne sont pas respectées)

On distingue deux zones différentes dans la fibre à gradient d'indice après propagation du faisceau dans le tronçon de silice :
- la zone 1, dans laquelle l'extension spatiale du faisceau lumineux est supérieure à celle obtenue sans tronçon de silice.
- la zone 2, dans laquelle l'extension spatiale du faisceau lumineux est inférieure à celle obtenue sans tronçon de silice.

En choisissant correctement la longueur de silice et de gradient d'indice de façon à terminer ce gradient d'indice en début de zone 1 on peut obtenir une extension spatiale du faisceau lumineux en sortie de l'optique supérieure à une optique sans silice. Cette configuration concerne par exemple les applications de connectique fibre à fibre avec trajet en espace libre, ou les application d'éclairement en espace de photodiodes.

En choisissant correctement la longueur de silice et de gradient d'indice de façon à terminer ce gradient d'indice en fin de zone 1 ou dans la zone 2, on peut obtenir une extension spatiale du faisceau lumineux en sortie de l'optique inférieure à une optique sans silice. Cette configuration permet d'obtenir des taches de focalisation plus petites que 10 µm, de manière à adapter cette optique à un laser par exemple.

Pour certaines applications, lorsque le tirage de la lentille à gradient d'indice est égal à 0, les tronçons de silice peuvent avoir une longueur nulle, auquel cas le ruban de fibres à gradient d'indice est directement soudé au ruban de fibres monomodes.

En considérant une fibre multimode à gradient d'indice 85/125 (diamètre de coeur/diamètre extérieur) à 1.3 µm, une fibre 62.5/125, ou tout autre fibre présentant un gradient d'indice adéquat :

Dans les applications de connectique fibre à fibre, on cherche à augmenter la taille du mode en sortie de fibre pour relâcher les tolérances de positionnement tout en augmentant la distance de travail. Le tronçon de fibre à gradient d'indice seul soudé à une fibre monomode permet certes d'augmenter la taille du mode de la fibre en sortie d'optique, mais de manière limitée par rapport à la configuration comprenant un tronçon de silice entre la fibre à gradient d'indice et la monomode.

Pour un tronçon de gradient d'indice seul, le diamètre de mode maximum est de l'ordre de 28 µm pour une longueur de gradient d'indice de P/4 (soit 365 µm), la distance de travail est alors nulle. La distance maximum entre fibres est de 460 µm, pour un diamètre de mode associé de 20 µm.
Avec un tronçon de silice interposé entre la lentille à gradient d'indice et la fibre monomode le diamètre de mode maximum est de 80 µm au lieu de 28 et la distance maximum entre fibres est de 1.8 mm au lieu de 460 µm. La perte de couplage étant équivalente dans les deux cas (0.5 db).

Les dispositifs de couplage optiques réalisés selon le procédé de l'invention ont plusieurs applications dans les modules émetteurs ou récepteurs multivoies dans le domaine des télécommunications par fibres optiques. Ce système optique est compatible en particulier avec un assemblage collectif passif sur plate-forme de silicium de barrettes de photodiodes PIN ou de lasers à semi-conducteurs devant des rubans de fibres monomodes.

Ils s'appliquent aussi à la connectique : connecteurs multivoies à alignement performant et très tolérant.

Pour une application laser à semi-conducteur/fibre monomode, le tronçon de fibre multimode à gradient d'indice seul soudé en bout de fibre monomode ne permet pas d'adapter le diamètre du mode en sortie d'optique à celui du laser (2 µm environ). En effet, ce diamètre ne peut pas descendre en dessous de 10 µm, et ce pour une longueur de gradient d'indice de P/2 soit 730 µm.

En revanche, en interposant un tronçon de silice typiquement de 500 µm entre la lentille à gradient d'indice (typiquement 400 µm de longueur) et la fibre monomode, on obtient un diamètre de mode en sortie d'optique adapté à celui du laser. On améliore ainsi les performances de couplage, les pertes passent typiquement de 10 à 4.5 db pour des lasers de 1.6 µm de diamètre de mode. C'est une très bonne performance pour des optiques réalisées par un procédé simple entièrement collectif.
De plus, du fait ,de la présence du tronçon de silice, la distance de travail laser-fibre est de l'ordre de 50 µm, au lieu du contact pour la fibre clivée ou le tronçon de gradient d'indice pur.

La figure 4 représente le schéma de principe de couplage entre une barrette de lasers et un ruban de fibres monomode muni d'un dispositif selon l'invention.

Les caractéristiques des lasers utilisés en barrettes sont les suivantes :
Type : BRS
Longueur d'onde : 1.3 µm

Les angles de divergence ainsi que les rayons de mode du faisceau gaussien du laser mesurés à 1/e² de l'intensité maximale dans les plans parallèle et perpendiculaire au plan de la jonction du laser, sont les suivants :

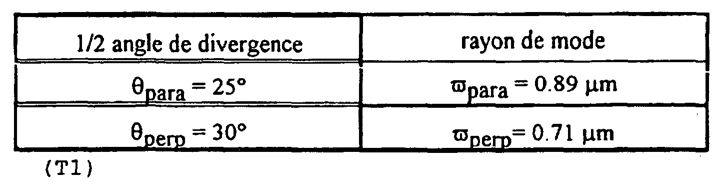

Puissance mesurée à la sphère intégratrice pour un courant de polarisation de 30 mA 20C : : P = 4000 µW.

Les pertes de couplage entre le laser décrit plus haut et le dispositif optique présentée dans le tableau T2 sont de 3,9 dB, pour une distance de travail de 63 µm

| (T2) | | | | | |
|---|---|---|---|---|---|
| I(µm) | L(µm) | distance de travail (µm) | pertes de couplage (dB) | tolérances en x et y à -1dB (µm) | tolérance en z à -1 dB (µm) |
| 1063 | 330 | 63 | 3.9 | ±1.1 | ±6 |

A titre de comparaison, le rendement de couplage entre le même laser et une fibre monomode clivée est de 9.1 dB pour une distance de travail de 20 µm, il est de 12 dB pour une distance de travail de 63 µm. Le faisceau gaussien de la fibre monomode clivée utilisée possède une symétrie de révolution et un rayon de mode de 4,5 µm, soit un demi-angle de divergence de 5.2°. La fibre clivée devrait être au contact du laser pour obtenir le moins de pertes, soit 8.6 dB, or on ne peut l'y placer sans détériorer le laser.

Le dispositif illustré permet donc de diminuer les pertes de couplage par rapport à une fibre clivée placée au mieux et d'augmenter la distance de travail de 63 µm.

Le dispositif optique de couplage selon l'invention permet d'obtenir l'éclairement de photodiodes PIN.

Le dispositif optique décrit dans le tableau T3, permet de reculer le point de focalisation de 0 à 200 µm et d'augmenter le diamètre de mode de 9 à 12 µm, par rapport à une fibre clivée.

Pour l'éclairement d'une photodiode PIN de 70 µm de manière à éclairer toute la surface de la photodiode.

| (T3) | | | |
|---|---|---|---|
| 1(µm) | L(µm) | distance de focalisation z (µm) | diamètre de mode D en z (µm) |
| 169 | 350 | 200 | 12 |

Le dispositif optique de couplage a été représenté schématiquement sur la figure 5 dans une application de connectique fibre à fibre, et n'est pas couvert par les revendications.

Pour les applications de connectique fibre à fibre, les tolérances de positionnement à -1 dB dans le plan perpendiculaire à l'axe optique entre deux fibres du dispositif sont de ± 5 µm contre ± 1,5 µm entre deux fibres clivées.

L'exemple représenté sur la figure 5 fait intervenir des tronçons de fibres multimodes à gradient d'indice seuls, l'ajout de tronçons de silice permet d'augmenter la distance entre les rubans, et de la faire passer d'une centaine de micromètres à plusieurs mm.

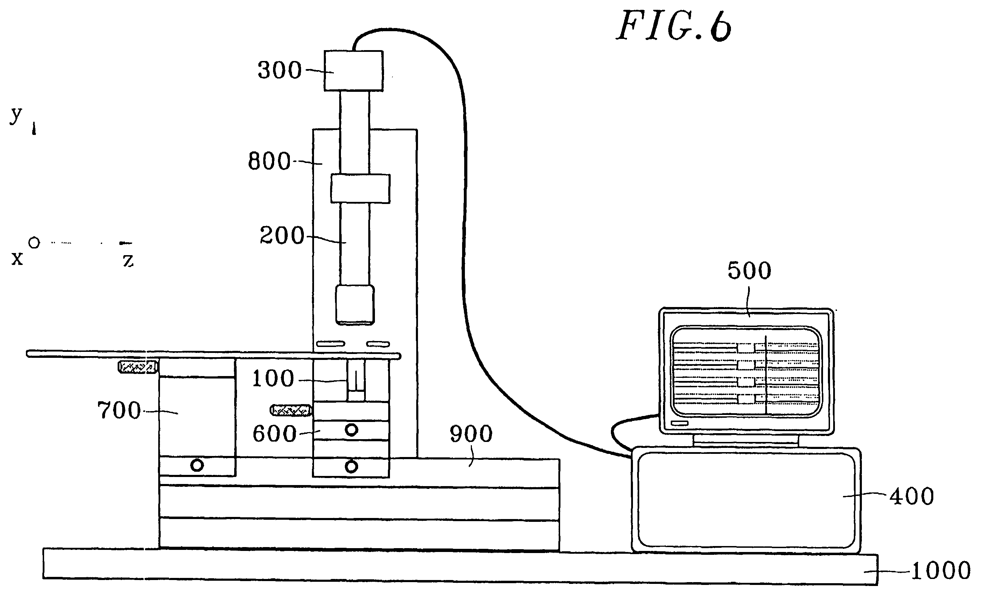

Les dispositifs optiques sont réalisés selon le procédé à l'aide d'une soudeuse à ruban standard et les fractures des tronçons de longueur précise sont menées à bien sur le banc schématisé sur la figure 6.

L'observation des différentes étapes décrites précédemment se fait à l'aide d'un vidéo microscope 200 à éclairage annulaire placé au-dessus du rail 900 qui supporte la pince à fracturer collective 100. Il s'agit d'une pince à fracturer les rubans FUJIKURA, toute pince à fracturer collective peut convenir, dans la mesure où elle permet une observation de la zone de fracture par le dessus.

Le vidéo microscope 300 est relié à une caméra 300 dont l'image s'affiche sur un moniteur vidéo 500 après traitement par un système de mesure de distance 400. Ce système projette des droites que l'on peut déplacer sur l'écran et permet, moyennant un étalonnage préalable, de mesurer des distances.

La pince à fracturer 10 peut se déplacer suivant trois directions x, y et z à l'aide du bloc 600 comprenant 3 platines manuelles de déplacement micrométrique, lui même fixé au rail 900 par l'intermédiaire d'un cavalier. On déplace le ruban de fibres suivant l'axe optique z à l'aide du bloc 700 qui comprend une platine manuelle de déplacement micrométrique reliée au même rail 900 par un cavalier. Ce degré de liberté suivant l'axe optique z permet d'amener le plan de soudure à l'endroit voulu par rapport au couteau de la pince à fracturer.

L'alignement entre le plan de soudure et la trace du couteau se fait de manière visuelle à l'aide du vidéo microscope. Le déplacement du ruban est ajusté à la cote voulue grâce au système de mesure 400. Le vidéo microscope est maintenu par une potence 800, l'ensemble et supporté par un socle stable 1000.

## Revendications

1. Procédé de fabrication et d'assemblage d'un dispositif optique de couplage optique sur l'extrémité d'un faisceau (10) de plusieurs fibres monomodes, en vue de permettre le couplage optique desdites fibres monomodes avec un module optoélectronique (40), **caractérisé en ce que** ledit procédé comporte au moins les étapes suivantes:
- assemblage collectif des faces terminales des fibres d'un faisceau (20) de plusieurs fibres à gradient d'indice aux faces terminales des fibres respectives d'un faisceau (30) de plusieurs fibres de silice,
- fracture collective des fibres du faisceau (30) de fibres de silice de manière à laisser des tronçons de fibres de silice (31) accolés aux fibres respectives du faisceau (20) de fibres à gradient d'indice,
- assemblage collectif des faces terminales des tronçons de fibres de silice (31) ainsi accolés aux fibres respectives du faisceau (20) aux faces terminales des fibres respectives d'un faisceau (10) de plusieurs fibres monomodes, et
- fracture collective des fibres du faisceau (20) de fibres à gradient d'indice ainsi reliées aux fibres respectives du faisceau (10) de fibres monomodes via les tronçons de fibres de silice (31) de manière à laisser accolés à ces tronçons (31) des tronçons de fibres à gradient d'indice destinés chacun à former une lentille sur l'extrémité correspondante desdits tronçons de fibres de silice (31), ces tronçons de fibres de silice (31) ayant en outre été réalisés pour placer les faces terminales des fibres monomodes à la bonne distance desdits tronçons de fibres à gradient d'indice destinés à servir de lentilles accolés aux extrémités des tronçons de fibres de silice (31) respectifs et/ou à adapter l'indice du milieu de propagation desdites fibres monomodes auxdites lentilles.

2. Procédé selon la revendication 1, **caractérisé en ce que** le faisceau (30) de fibres de silice est remplacé par un faisceau de fibres à saut d'indice.

3. Procédé selon l'une quelconque des revendications précédentes, **caractérisé en ce que** les faisceaux de fibres (10, 20, 30) ont une structure sous forme d'au moins un ruban.

4. Procédé selon l'une des revendications précédentes, **caractérisé en ce que** les fibres monomodes ainsi pourvues desdits tronçons de fibre de silice (31) prolongés par lesdits tronçons de fibres à gradient d'indice sont destinées à être couplées avec un module optoélectronique constitué d'un ensemble d'au moins un composant actif.

5. Procédé selon la revendication 4, **caractérisé en ce que** le composant actif est un laser.

6. Procédé selon la revendication 4, **caractérisé en ce que** le composant actif est une photodiode.

## Patentansprüche

1. Verfahren für die Herstellung und die Verbindung einer optischen Vorrichtung zur optischen Kopplung am Ende eines Strahenbündels (10) aus mehreren Monomodefasern, um die optische Kopplung der besagten Monomodefasern mit einem optoelektronischen Modul (40) zu ermöglichen, dahingehend gekennzeichnet, dass das besagte Verfahren mindestens folgende Etappen enthält:
- kollektive Verbindung der Faserendflächen eines aus mehreren Monomodefasern mit Gradientindex bestehenden Strahlenbündels (20) an die Faserendflächen eines aus mehreren Quarzfasern bestehenden Strahlenbündels (30)
- kollektiver Bruch der Fasern eines Quarzfaserbündels (30), so dass die Abschnitte der Quarzfasern (31) mit den jeweiligen Fasern des Strahlenbündels (20) mit Gradientindex verbunden bleiben;
- kollektive Montage der Faserendflächen der Quarzfaserabschnitte (31), an denen die respektiven Fasern des Strahlenbündels (20) hängen, an die Endflächen der jeweiligen Fasern eines aus mehreren Monomodefasern bestehenden Strahlenbündels (10), und
- kollektiver Bruch der Fasern des aus Fasern mit Gradientindex bestehenden Strahlenbündels (20), die derart an die respektiven Fasern eines Monomodefaser-Strahlenbündels (10) via die Quarzfaserabschnitte (31) verbunden sind, dass an diesen Abschnitten (31) die Abschnitte aus Fasern mit Gradientindex haften bleiben, welche dazu bestimmt sind, jeweils am entsprechenden Ende der besagten Quarzfaserabschnitte (31) eine Linse zu bilden. Die Quarzfaserabschnitte (31) werden ebenfalls so ausgeführt, dass die Endflächen der Monomodefasern im korrekten Abstand zu den besagten Faserabschnitten mit Gradientindex zu liegen kommen; sie dienen als Linsen, die mit den Enden der respektiven Quarzfaserabschnitte (31) verbunden sind bzw. sie passen den Übertragungsmediumindex der besagten Monomodefasern an die besagten Linsen an.

2. Verfahren nach Patentanspruch 1, dahingegend gekennzeichnet, dass das Quarzfaser-Strahlenbündel (30) durch ein Stufenindexfaserbündel ersetzt wird.

3. Verfahren nach einem der vorgenannten Patentansprüche, dahingegehend gekennzeichnet, dass die Faserbündel (10, 20, 30) eine Struktur aus mindestens einem Band besitzen.

4. Verfahren nach einem der vorgenannten Patentansprüche, dahingegehend gekennzeichnet, dass die Monomodefaser, welche mit den besagten Quarzfaserabschnitten (31) versehen sind, von den besagten Faserabschnitten mit Gradientindex verlängert werden und dazu bestimmt sind, mit einem optoelektronischen Module gekoppelt zu werden, das aus einem Element mit mindestens einem aktiven Bauteil besteht.

5. Verfahren nach Patentanspruch 4, dahingegehend gekennzeichnet, dass das aktive Bauteil ein Laser ist.

6. Verfahren nach Patentanspruch 4, dahingegehend gekennzeichnet, dass das aktive Bauteil eine Fotodiode ist.

## Claims

1. Method of manufacturing and assembling an optical device for optical coupling of the end of a beam (10) of several monomode fibres, with the aim of allowing the optical coupling of the said monomode fibres with an opto-electronic module (40), **characterised in that** the said method comprises at least the following stages:
- collective assembling of the end faces of the fibres of a beam (20) of several graded-index fibres to the end faces of the respective fibres of a beam (30) of several silica optical fibres;
- collective rupture of the fibres of the beam (30) of silica optical fibres so as to leave lengths of silica optical fibres (31) alongside the respective fibres of the beam (20) of graded-index fibres;
- collective assembling of the end faces of the lengths of silica optical fibres (31) thus placed alongside the respective fibres of the beam (20) to the end faces of the respective fibres of a beam (10) of several monomode fibres; and
- collective rupture of the fibres of the beam (20) of graded-index fibres thus linked to the respective fibres of the beam (10) of monomode fibres via the lengths of silica optical fibres (31) so as to leave alongside these lengths (31) lengths of graded-index fibres each intended to form a lens on the corresponding end of the said lengths of silica optical fibres (31), these lengths of silica optical fibres (31) having, moreover, been made to place the end faces of the monomode fibres at the right distance from the said lengths of graded-index fibres intended to serve as lenses placed alongside the ends of the respective lengths of silica optical fibres (31) and/or to adapt the index of the propagation medium of the said monomode fibres of the said lenses.

2. Method according to claim 1, **characterised in that** the beam (30) of silica optical fibres is replaced by a beam of step-index optical fibres.

3. Method according to any one of the previous claims, **characterised in that** the beams of fibres (10, 20, 30) have a structure in the form of at least one band.

4. Method according to any one of the previous claims, **characterised in that** the monomode fibres thus fitted with the said lengths of silica optical fibre (31) elongated with the said lengths of graded-index fibres are intended to be coupled with an opto-electronic module comprised of a unit of at least one active component.

5. Method according to claim 4, **characterised in that** the active component is a laser.

6. Method according to claim 4, **characterised in that** the active component is a photo-diode.
